# EUROPEAN PATENT SPECIFICATION

(11) **EP 1 905 313 B1**
(45) Date of publication and mention of the grant of the patent: **03.04.2013**
(21) Application number: 06780660.4
(22) Date of filing: 23.06.2006
(51) Int. Cl.: A23L 2/52, A23L 2/02, A23L 1/308

(54) **VEGETABLE AND/OR FRUIT BEVERAGE COMPOSITION**
GEMÜSE- UND/ODER FRUCHTSAFTGETRÄNKPRODUKT
COMPOSITION DE BOISSON DE LEGUME ET/OU DE FRUIT

(30) Priority: 24.06.2005 JP 2005185484
(43) Date of publication of application: 02.04.2008
(73) Proprietor: Kao Corporation, Chuo-ku Tokyo 103-8210 (JP)
(72) Inventor: SUGIURA, Yoko, Kao Corporation Research Lab., Tokyo 131-8501 (JP); KUBO, Yuko, Kao Corporation Research Lab., Tokyo 131-8501 (JP)
(74) Representative: HOFFMANN EITLE
(86) International application number: PCT/JP2006/312623
(87) International publication number: WO 2006/137529

(56) References cited:
- EP-A1- 0 307 523
- EP-A1- 1 698 240
- EP-A1- 1 859 692
- WO-A1-03/073868
- JP-A- 2002 078 469
- JP-A- 2003 012 537
- JP-A- 2007 029 082
- JP-A- 2007 190 008
- KR-A- 20040 087 268

## Description

### [Field of the Invention]

The present invention relates to a vegetable and/or fruit beverage composition.

### [Background of the Invention]

Today, the eating habits of Japanese people tend to be unstable owing to changes in their living environment. In particular, a serious problem is arising from the unbalance of nutrients such as the excess of energy intake or the inadequate intake of dietary fibers and minerals, caused by an increase in meal skipping ratio, solitary meals, and excessive dependency on processed foods. Such unbalance of nutrients is one of the risk factors leading to life-style related diseases, so it is crucial that nutrients should be balanced adequately, for a healthy life. It is also becoming evident that sufficient intake of vegetables and fruits have an effective role in improving such unbalanced intake of nutrients. In Japan, the targeted daily intake of vegetables is 350 g per day (reference amount: 292 g, according to the national nutrition survey in 1997), as recommended by "National Health Promotion Strategy for the 21st Century (Health Japan 21)". Turning now to the U.S.A., it is recommended to take at least five kinds of vegetables and at least three kinds of fruits a day, with the aim of preventing life-style related diseases (5+3 campaign). In light of such circumstances, it is extremely beneficial to subject vegetables or fruits to a process intended for easy intake, in order to succeed in a nationwide promotion of a healthy life-style.

Processing vegetables or fruits into juice is an effective means for facilitating the intake thereof. However, to those who loath to eat vegetables and fruits, such a processed product is still not easy to intake, because its grassy odor or taste and viscous texture are offensive to their nerves even when served in a form of juice. As a way to solve such a problem, attention was paid on the good hydrophilicity/hydrophobicity balance of diacyl glyceride for a grassy odor component or bitterness component of the vegetable juice or fruit juice, and such a product is now known as a food having diacylglyceride incorporated therein to reduce a grassy odor and a bitter taste (Patent Document 1).

Also, methods of improving the taste of a vegetable juice or fruit juice have been reported so far, for example, a method (Patent Document 2) using erythritol which is one of sugar alcohols and a method (Patent Document 3) using α-linked galacto-oligosaccharide which is one of oligosaccharides. But these methods have a problem that the sweet taste of such components inevitably has an influence on the taste of the end product of the juice.

On the other hand, a method of improving the taste of a vegetable juice or fruit juice by adding thereto a carboxyl-containing water-soluble acidic polysaccharide is known (Patent Document 4), but it has a problem that a marked increase in the viscosity of the juice solution disturbs smooth drinking.
Vegetable beverages comprising parsley juice and polydextrose, which have been subjected to heat sterilization and which exhibit a good taste and no flavour deterioration are known (Patent Document 5).
A further problem is that such a vegetable and/or fruit beverage composition emits a heated odor when subjected to heat sterilization.
[Patent Document 1] JP-A-7-51034
[Patent Document 2] JP-A-9-117262
[Patent Document 3] JP-A-2003-250486
[Patent Document 4] JP-A-2003-116496.
Patent Document 5 JP-A-2002-078469.

### [Disclosure of the Invention]

In the present invention, there is thus provided a vegetable and/or fruit beverage composition, containing the following components (A), (B) and (C):
(A) from 0.1 to 1.2 wt.% of solids derived from at least one vegetable and/or fruit,
(B) polydextrose, and
(C) water; and subjected to heat sterilization, as described in claim 1.

### [Detailed Description of the Invention]

The present invention relates to the provision of a beverage containing a vegetable and/or fruit and which is easy to drink because its grassy odor and heated odor due to heat sterilization are reduced.

The present inventors prepared beverages containing a vegetable juice or fruit juice and carried out various investigations on their grassy odor, heated odor caused by heat sterilization, savory taste and ease of drinking. As a result, it has been found that by adding polydextrose and adjusting the solid content derived from vegetables or fruits within a predetermined range, a grassy odor and a heated odor caused by heat sterilization can be reduced, resulting in marked improvement in the ease of drinking. The term "grassy odor" as used herein means an odor which we detect when inhaling an alcohol such as hexanol, an aldehyde such as hexanal, a disulfide or a phthalide.

The vegetable and/or fruit beverage composition of the present invention can be taken continuously for a long period of time because its grassy odor and heated odor due to heat sterilization are reduced, and it is easy to drink. In addition, owing to polydextrose contained in the beverage, it is expected to have an intestinal regulation effect or laxative effect.

The vegetable and/or fruit beverage composition of the present invention contains squeezed juice of vegetables and/or fruits which is usually thought to have a grassy odor and disturb smooth drinking. Examples of the squeezed juice of vegetables which is usually thought to have a grassy odor and disturb smooth drinking include that of tomato, carrot, spinach, cabbage, Brussels sprout, broccoli, cauliflower, celery, lettuce, parsley, watercress, kale and soybean. Similarly, examples of the squeezed juice of fruits which is usually thought to have a grassy odor and disturb smooth drinking include that of melon, watermelon, Japanese plum, kiwifruit, guava and prune. Component (A) to be used in the present invention is a solid derived from vegetables and/or fruits and the amount of the solid is from 0.1 to 1.2 wt.%, preferably from 0.2 to 1.2 wt.%, more preferably from 0.5 to 1.2 wt.%, each in terms of dry weight. Examples of such vegetables and fruits include vegetables such as tomato, carrot, spinach, cabbage, Brussels sprout, broccoli, cauliflower, celery, lettuce, parsley, watercress, kale and soybean and fruits such as lemon, grapefruit, orange, apple, grape, melon, watermelon, Japanese plum, kiwifruit, guava and prune. The beverage of the present invention contains a predetermined amount of solids derived from these vegetables and/or fruits. The term "solid" as used herein means an insoluble substance dispersible in an aqueous solution and having a size of 833 µm (20 mesh) or less and the solid content can be measured in the following manner.
Specifically, a sample which has been temperature-controlled to 25°C is stirred well to homogenize it. The resulting sample is then filtered through a 20-mesh (opening of the mesh of the sieve: 833 µm) Tyler standard sieve. After stirring and homogenization of the sample which has passed through the mesh, a 10-g portion is weighed in a centrifugal precipitation tube, followed by centrifugal separation for 30 minutes by using a high-speed refrigerated centrifuge ("Himac CR20G", product of HITACHI) at a treating temperature of 20°C and maximum centrifugal acceleration set within a range of from 4×10⁵ to 5.2×10⁵ [m/s²]. The filter paper having a retention particle size of 1 µm ("No. 5C", product of ADVANTEC, diameter: 90 mm) was weighed and after centrifugation, the supernatant solids in the centrifugal precipitation tube were collected by filtration. The solids remaining in the centrifuge tube were all washed with water. All the solids were collected on the same filter paper and washed with water. After the filter paper was dried at 60°C for 1 hour, its wt. was measured. The wt. of the solids in 10 g of the sample was found from the following equation: (mass of solids) = (mass of filter paper after drying) - (mass of filter paper).

When the mass of the solids contained in the beverage containing squeezed juice of vegetables and/or fruits having a strong grassy odor is excessively small, the beverage becomes unsuitable for drinking owing to a strong grassy odor. When the mass of solids is excessively large, on the other hand, the viscosity and unpleasant heated odor caused by heat sterilization increase, which disturbs smooth drinking.

The content (dry mass) of Component (A) in the vegetable and/or fruit beverage composition of the present invention is from 0.1 to 1.2 wt.%, preferably from 0.2 to 0.9 wt..%, more preferably from 0.21 to 0.85 wt.%, even more preferably from 0.25 to 0.8 wt.%, even more preferably from 0.3 to 0.6 wt.% of the composition which has passed through a 20-mesh (opening of the mesh of the sieve: 833 µm) Tyler standard sieve. When a lot of solids are contained in the squeezed juice of vegetables and/or fruits having a grassy odor, the solid content can be adjusted by removing the solids through filtration or centrifugal separation. When only a small or a trace amount of solids is contained in the squeezed juice of vegetables and/or fruits having a grassy odor, on the other hand, the solid content can be adjusted by adding a solid obtained from other vegetables and/or fruits by filtration or centrifugal separation.

As polydextrose (B) to be used in the present invention, a component having an energy conversion coefficient of 0 (kcal/g) as defined in 1) of Item 1 of Shokushinhatsu No. 0217002 dated 17th February, 2003 which is Notification from Director of Office of Health Policy on Newly Developed Foods/Policy Planning Division/Department of Food Safety/Pharmaceutical and Food Safety Bureau/Ministry of Health, Labour and Welfare (partial amendment of "Analysis method of nutrition components in nutrition labeling standards") is usable.

Although no particular limitation is imposed on the viscosity of an aqueous solution of polydextrose (B), it preferably does not turn into a gel at a low concentration and does not have a high viscosity. In order to provide the beverage composition in a form easy to drink, a 1 wt.% aqueous solution of polydextrose (B) preferably has fluidity at 25°C. A 1 wt.% aqueous solution of it has preferably a viscosity of 200 mPa·s or less, more preferably 50 mPa·s or less, even more preferably 20 mPas· or less, even more preferably 10 mPas· or less, even more preferably 5 mPa·s or less. The viscosity is measured using a Brookfield type viscometer while applying a rotation speed of 60 rpm to a rotor (Rotor No. 1).

The content of Component (B) in the vegetable and/or fruit beverage composition of the present invention is preferably from 0.5 to 30 wt.%, more preferably from 1 to 20 wt.%, even more preferably from 1 to 15 wt.%, even more preferably from 1.1 to 12 wt.%, even more preferably from 1.2 to 10 wt.%, even more preferably from 1.3 to 8 wt.%, even more preferably from 1.4 to 6 wt.%, from the viewpoints of the effects for reducing a grassy odor and improving the savory taste and ease of drinking.
The polydextrose content is determined by high performance liquid chromatography (enzyme-HPLC method) described in Food Nutrition Labeling Standard System, 2nd Edition (published on July 1, 1999, ed. by Nutrition Food Department/Japan Health Food & Nutrition Food Association, pp. 46-51).

The vegetable and/or fruit beverage composition of the present invention must contain water as Component (C) in order to enhance smooth drinking. Its content is preferably 65 wt.% or greater, more preferably 80 wt.% or greater, even more preferably from 86 to 96 wt.% of the vegetable and/or fruit beverage composition of the present invention.

It is preferred to add an acidic polysaccharide water-soluble dietary fiber (D) further to the vegetable and/or fruit beverage composition of the present invention. The addition of the acidic polysaccharide water-soluble dietary fiber is effective for enhancing the effects of Component (B) for reducing the grassy odor and improving the savory taste and ease of drinking. The acidic polysaccharide water-soluble dietary fiber (D) is a water soluble one among acidic polysaccharide dietary fibers. The acidic polysaccharide dietary fiber (D) is a dietary fiber having an acidic group such as a carboxyl group, sulfonyl group or sulfuric acid residue. A white precipitate appears by the addition of 1 mL of a 0.02 mol/L aqueous solution of sodium sulfate and 1 mL of a 1 wt.% aqueous solution of cetyltrimethylammonium chloride to 1 mL of a 1 wt.% aqueous solution of the acidic polysaccharide water-soluble dietary fiber (D).

The content of the acidic polysaccharide water-soluble dietary fiber (D) to be used in the present invention is determined by a Prosky method (enzyme-weight method) as described in Food Nutrition Labeling Standard System, 2nd Edition (published on July 1, 1999, ed. by Nutrition Food Department/Japan Health Food & Nutrition Food Association, pp. 46-51). Specifically, the content is determined by subtracting the total mass of indigestible protein and ash from the mass of a residue precipitated in an about 80 wt.% ethanol after a series of enzymatic treatments under predetermined conditions.

The acidic polysaccharide water-soluble dietary fiber (D) to be used in the present invention is preferably available from plants, seaweeds or fungi by extraction, decomposition and purification. Specific examples include alginic acid, reduced molecular weight alginic acid, carrageenan, fucoidan, porphylan, agalopectin, pectin, low-molecular pectin, gum arabic, karaya gum, gellan gum, and xanthan gum, and salts thereof. They may be added either singly or in combination of two or more. As the salts, alkali metal salts are preferred, with sodium salts being more preferred. The acidic polysaccharide water-soluble dietary fiber (D) of the present invention has an excellent effect for reducing the grassy odor of a beverage containing the squeezed juice of vegetables or fruits having a grassy odor and enhancing the savory taste compared with other dietary fibers.

Although no particular limitation is imposed on the viscosity of an aqueous solution of the acidic polysaccharide water-soluble dietary fiber (D), it is preferred that the solution does not turn into a gel at a low concentration and in addition, does not have a high viscosity. In order to provide the beverage composition in a form easy to drink, the acidic polysaccharide water-soluble dietary fiber (D) preferably has a fluidity at 25°C in the form of a 1 wt.% aqueous solution. The 1 wt.% aqueous solution has a viscosity of preferably 200 mPa·s or less, more preferably 50 mPa·s or less, even more preferably 20 mPa·s or less, even more preferably 10 mPa·s, even more preferably 5 mPa·s or less. The viscosity is measured using a Brookfield type viscometer while applying a rotation speed of 60 rpm to a rotor (Rotor No. 1).

The content of Component (D) in the vegetable and/or fruit beverage composition of the present invention is preferably from 0.5 to 30 wt.%, more preferably from 1 to 20 wt.%, even more preferably from 1 to 15 wt.%, even more preferably from 1.1 to 12 wt.%, even more preferably from 1.2 to 10 wt.%, even more preferably from 1.3 to 8 wt.%, even more preferably from 1.4 to 6 wt.% from the viewpoints of effects for reducing a grassy odor and improving a savory taste and ease of drinking.

When Components (B) and (D) are used in combination, the total content of Components (B) and (D) in the vegetable and/or fruit beverage composition of the present invention is preferably from 0.5 to 30 wt.%, more preferably from 1 to 20 wt.%, even more preferably from 1 to 15 wt.%, even more preferably from 1.1 to 12 wt.%, even more preferably from 1.2 to 10 wt.%, even more preferably from 1.3 to 8 wt.%, even more preferably from 1.4 to 6 wt.% from the viewpoints of effects for reducing a grassy odor and improving a savory taste and ease of drinking.

In addition to these components, it is possible to add other dietary fibers, sugars (such as starch, dextrin and sucrose), proteins (such as casein, soybean protein and egg white), minerals (such as calcium carbonate and iron lactate), vitamins (vitamin A, B₁, B₂, B₁₂ and C), rice, barley, wheat, corn, meats, edible oil, and seasonings to the vegetable and/or fruit beverage composition of the present invention as needed. They may be used either singly or in combination. Of these, vitamin C is preferred.

The vegetable and/or fruit beverage composition of the present invention preferably has a pH of from 3 to 7, more preferably from 3.5 to 5.5, even more preferably from 3.8 to 4.6 from the viewpoints of storage stability and ease of drinking of the composition.
In addition, the vegetable and/or fruit beverage composition of the present invention preferably contains solids passing through a 20-mesh Tyler standard sieve (opening of the mesh of the sieve: 833 µm), that is, solids having a size of 833 µm or less.

The vegetable and/or fruit beverage composition of the present invention has a viscosity of preferably from 300 mPa·s or less, more preferably from 1 to 250 mPa·s, even more preferably from 2 to 225 mPa·s, even more preferably from 3 to 200 mPa·s.

The vegetable and/or fruit beverage composition of the present invention may contain additives such as antioxidants, flavors, various esters, organic acids, salts of organic acids, inorganic acids, salts of inorganic acids, inorganic salts, colorants, emulsifiers, preservatives, seasonings, pH regulators and quality stabilizers, depending on the components derived from vegetables or fruits. These additives may be used either singly or in combination.

Examples of the inorganic acids and salts of inorganic acids include phosphoric acid, disodium phosphate, sodium metaphosphate, and sodium polyphosphate.

The vegetable and/or fruit beverage composition of the present invention is provided preferably in the form of a packaged beverage subjected to heat sterilization. As a container for the beverage composition, commonly employed containers such as a molded container (so-called PET bottle) composed mainly of polyethylene terephthalate, a metal can, a paper container laminated with a metal foil or plastic film and a bottle can be used. The term "packaged beverage" as used herein means a packaged beverage which can be taken without dilution.

The vegetable and/or fruit beverage composition of the present invention can be prepared by filling the composition in a container such as a metal can, followed by sterilization, if it can withstand heat sterilization, under conditions as specified by the Food Sanitation Law. When the container cannot withstand retort sterilization, for example, a PET bottle or paper container, employed is a method of sterilizing the beverage composition under similar sterilization conditions to those described above in advance, for example, by subjecting the beverage composition to high-temperature short-time sterilization on a plate type heat exchanger, cooling it to a predetermined temperature and then filling it in the container. Or, it is possible to fill, in a container filled with the composition, another component in a sterile condition.

### [Examples]

Beverage compositions (125 g) which were equal in the total amount of polydextrose and tomato juice but were different in the solid content in the system were prepared. The solid content was adjusted by removing solid matters by centrifugation or filtration from the tomato juice containing solid matters abundantly. The packaged beverages of Example 1 and Comparative Examples 1, 2 and 3 were all obtained by filling each composition in a package after filtration through a 20-mesh Tyler standard sieve, adjustment of the pH to 4.3 with citric acid and trisodium citrate, and UHT sterilization under conditions of 124°C and 30 seconds. Each beverage composition of Example 1 and Comparative Examples 1, 2 and 3 has a water content of 80% or greater.

### Example 1

Tomato juice (1): 99 wt.%
Polydextrose ("Litesse Ultra", product of Danisco Japan): 1 wt.%
Solid content: 0.5 wt.%

### Comparative Example 1

Tomato juice (2): 100%
Solid content: 1.3 wt.%

### Comparative Example 2

Tomato juice (1): 100 wt.%
Solid content: 0.5 wt.%

### Comparative Example 3

Tomato juice (2): 99.5 wt.%
Polydextrose ("Litesse Ultra", product of Danisco Japan): 0.5 wt.%
Solid content: 1.3 wt.%

### (Determination method of solid content)

A sample which has been temperature-controlled to 25°C is stirred well to homogenize it. The resulting sample is then filtered through a 20-mesh Tyler standard sieve. After homogenization of the sample which has passed through the mesh, a 10-g portion is weighed in a centrifugal precipitation tube, followed by centrifugal separation for 30 minutes by using a high-speed refrigerated centrifuge ("Himac CR20G", product of HITACHI) at a treating temperature of 20°C and a maximum centrifugal acceleration set within a range of from 4×10⁵ to 5.2×10⁵ [m/s²]. The filter paper having a retention particle size of 1 µm ("No. 5C", product of ADVANTEC, diameter: 90 mm) was weighed and then supernatant solids in the centrifugal precipitation tube after centrifugation were collected by filtration. The solids remaining in the centrifugal precipitation tube were then all washed with water. Finally, all the solids were collected on the same filter paper and washed with water. After the filter paper was dried at 60°C for 1 hour, its mass was measured. The mass of solids in 10 g of the sample was determined from the following equation: (mass of solids) = (mass of filter paper after drying) - (mass of filter paper).

A panel of two or three experts was asked to evaluate beverages of Example 1 and Comparative Examples 1, 2 and 3 containing tomato juice.
The beverages of Comparative Examples 1 and 3 having a solid content as high as 1.3 wt.% had a grassy odor and heated odor. Compared with them, the beverage of Comparative Example 2 having a solid content of 0.5 wt.% had a less heated odor, but had a slightly stronger grassy odor. On the other hand, it has been confirmed that the beverage of Example 1 having a solid content of 0.5 wt.% and containing polydextrose had a reduced grassy odor and heated odor and therefore is greatly improved in ease of drinking.

### Examples 2 to 4

In a similar manner to Example 1, 125 g of beverage compositions which were equal in the total amount of polydextrose and tomato juice but different in the solid content in the system were prepared. A panel of two or three experts was asked to evaluate these beverages. Each beverage composition of Examples 2 to 4 has a water content of 80% or greater.

**[Table 1]**

| | | Ex. 2 | Ex. 3 | Ex. 4 |
|---|---|---|---|---|
| <Formulation> | | | | |
| Tomato juice (3) | wt.% | 93 | | |
| Tomato juice (4) | wt.% | | 82.6 | |
| Tomato juice (5) | wt.% | | | 69.2 |
| Fruit juice mixture * | wt.% | | | 29.6 |
| Polydextrose (B) | wt.% | 7 | 17.4 | 1.2 |
| (Polydextrose content) | (wt.%) | (6) | (14.9) | (1.03) |
| Total weight | wt.% | 100 | 100 | 100 |

| <Physical properties> | | | | |
|---|---|---|---|---|
| Insoluble solids | wt.% | 0.8 | 0.2 | 0.7 |
| pH after sterilization | - | 4.2 | 4.3 | 4.1 |
| Viscosity after sterilization | mPas | 125 | 6.3 | 22.1 |

| <Evaluation results> | | | | |
|---|---|---|---|---|
| Grassy odor | | Weak | Slightly weak | Weak |
| Heated odor | | Weak | Slightly weak | Weak |

Polydextrose (B): ("Litesse Ultra", product of Danisco Japan): product having a purity of 86 wt.% * The fruit juice mix prepared by mixing 800 g of "Yasai Seikatsu 100" (product of Kagome), 100 g of "Grapefruits 100%" (product of Sunkist), and 100 g of "Orange 100%" (product of Sunkist) to obtain a mixture (Brix: 9.0) and removing solids therefrom by centrifugal separation was used. The tomato juice (5) used in Example 4 had a Brix adjusted to 5.0. "Yasai Seikatsu 100" contained carrot, spinach, parsley, celery, cabbage, lemon and apple. 100% of the insoluble solids in the beverage were derived from tomatoes.

It has been confirmed that as is apparent from Table 1, the beverages obtained in Examples 2 to 4 have reduced grassy odor and heated odor and are greatly improved in ease of drinking.

A beverage composition (125 g) of Example 5 containing a tomato juice, polydextrose as Component (B), and a reduced molecular weight sodium alginate as Component (D) was prepared. The solid content was adjusted by removing solid matters from the tomato juice rich in solids by centrifugal separation or filtration. The packaged beverage of Example 5 was obtained by causing the beverage to pass through a 20-mesh Tyler standard sieve, adjusting its pH to 4.3 with citric acid and trisodium citrate, subjecting it to UHT sterilization under conditions of 124°C and 30 seconds, and then filling it in a container. The beverage of Example 5 has a water content of 80% or greater.

### Example 5

Tomato juice: 97 wt.%
Polydextrose ("Litesse Ultra", product of Danisco Japan): 1 wt.%
Reduced molecular weight sodium alginate ("Solgin", product of Kaigen): 2 wt.%
Solid content: 0.5 wt.%

A panel of two or three experts was asked to evaluate the beverage of Example 5 containing a tomato juice. As a result, it has been confirmed that the beverage of Example 5 also has reduced grassy odor and heated odor and is greatly improved in ease of drinking.

## Claims

1. A vegetable and/or fruit beverage composition, comprising the following components (A), (B) and (C):
(A) from 0.1 to 1.2 wt.% of water insoluble substance having a size of 833 µm (20 mesh) or less, derived from at least one vegetable and/or fruit,
(B) polydextrose, and
(C) water; wherein the beverage composition is subjected to heat sterilization.

2. The vegetable and/or fruit beverage composition according to Claim 1, wherein Component (B) is contained in an amount from 0.5 to 30 wt.%.

3. The vegetable and/or fruit beverage composition according to Claim 1 or 2, wherein at least one or more vegetable is selected from the group consisting of tomato, carrot, kale, parsley, celery, cabbage, and spinach, and wherein the vegetable is contained in the form of squeezed juice.

4. The vegetable and/or fruit beverage composition according to any one of Claims 1 to 3, which is provided as a packaged beverage.

## Patentansprüche

1. Gemüse- und/oder Fruchtsaftgetränkzusammensetzung, die die folgenden Komponenten (A), (B) und (C) umfasst:
(A) von 0,1 bis 1,2 Gew.% an wasserunlöslicher Substanz mit einer Größe von 833 µm (20 mesh) oder weniger, die von mindestens einer Gemüse- und/oder einer Fruchtsorte abgeleitet ist,
(B) Polydextrose und
(C) Wasser; worin die Getränkezusammensetzung einer Hitzesterilisation unterzogen ist.

2. Gemüse- und/oder Fruchtsaftgetränkzusammensetzung gemäß Anspruch 1, worin Komponente (B) in einer Menge von 0,5 bis 30 Gew.% enthalten ist.

3. Gemüse- und/oder Fruchtsaftgetränkzusammensetzung gemäß Anspruch 1 oder 2, worin mindestens ein oder mehrere Gemüsesorten aus der Gruppe bestehend aus Tomaten, Karotten, Grünkohl, Petersilie, Sellerie, Weißkohl und Spinat ausgewählt sind, und worin das Gemüse in Form von gepresstem Saft enthalten ist.

4. Gemüse- und/oder Fruchtsaftgetränkzusammensetzung gemäß irgendeinem der Ansprüche 1 bis 3, die in Form eines verpackten Getränks bereitgestellt ist.

## Revendications

1. Composition de boisson de légume et/ou de fruit, comprenant les composants suivants (A), (B) et (C) :
(A) de 0,1 à 1,2% en poids d'une substance insoluble dans l'eau ayant une taille de 833 µm (20 mesh) ou moins, dérivée d'au moins un légume et/ou un fruit,
(B) du polydextrose, et
(C) de l'eau ; où la composition de boisson est soumise à une stérilisation thermique.

2. Composition de boisson de légume et/ou de fruit selon la revendication 1, dans laquelle le composant (B) est contenu en une quantité allant de 0,5 à 30% en poids.

3. Composition de boisson de légume et/ou de fruit selon la revendication 1 ou 2, dans laquelle au moins un ou plusieurs végétaux est/sont choisi(s) parmi le groupe constitué de tomate, de carotte, de chou frisé, de persil, de céleri, de chou, et d'épinard, et où le légume est contenu sous forme de jus pressé.

4. Composition de boisson de légume et/ou de fruit selon l'une quelconque des revendications 1 à 3, qui est prévue sous la forme d'une boisson conditionnée.
